# EUROPEAN PATENT APPLICATION

(11) **EP 4 722 941 A1**
(43) Date of publication of application: **08.04.2026**
(21) Application number: 25206368.0
(22) Date of filing: 02.10.2025
(51) Int. Cl.: G06F 16/242, G06F 16/2452, G06F 16/332, G06F 16/3329

(54) **SYSTEM AND METHOD FOR GENERATIVE ARTIFICIAL INTELLIGENCE (AI) MODEL-BASED RESOLUTION OF AMBIGUITIES IN NATURAL LANGUAGE QUERY-TO-DATABASE COMMAND QUERY CONVERSION**

(30) Priority: 03.10.2024 US 202418905959
(71) Applicant: Microsoft Technology Licensing, LLC, Redmond, WA 98052-6399 (US)
(72) Inventor: Deep, Shaleen, Redmond, WA, 98052 (US); Psallidas, Fotios, Redmond, WA, 98052 (US); Floratou, Avrilia, Redmond, WA, 98052 (US); Zhao, Fuheng, Redmond, WA, 98052 (US)
(74) Representative: Grünecker Patent- und Rechtsanwälte PartG mbB

(57) **Abstract**

A method, computer program product, and computing system for processing a natural language query concerning data stored within an electronic database. The natural language query is converted into a database command query using a generative AI model. A flagged ambiguity is generated by flagging an ambiguity associated with the natural language query using the generative AI model. User feedback concerning the flagged ambiguity is obtained. The database command query is revised by processing the natural language query, the database command query, and the flagged ambiguity using the generative AI model.

## Description

### Background

Translating natural language questions into database command queries (e.g., SQL queries) (NL2SQL) that currently limits the ability of users to effectively access the contents of an electronic database. Conventional approaches address NL2SQL using generative artificial intelligence (AI) models (e.g., Large Language Models (LLMs)) with careful prompt engineering, fine-tuning existing LLMs, and training custom models. However, these approaches are unable to address inherent ambiguity in the natural language questions asked by users.

### Brief Description of the Drawings

FIG. 1 is a flow chart of one implementation of an ambiguity resolution process;
FIG. 2 is a diagrammatic view of the ambiguity resolution process of FIG. 1 during the generating and processing of a clarification query using a generative AI model;
FIG. 3 is a diagrammatic view of the ambiguity resolution process of FIG. 1 during the generating and processing of a revised database command query using the generative AI model; and
FIG. 4 is a diagrammatic view of a computer system and the ambiguity resolution process coupled to a distributed computing network.

Like reference symbols in the various drawings indicate like elements.

### Detailed Description of the Embodiments

Implementations of the present disclosure enable a framework that assists generative artificial intelligence (AI) models (e.g., large language models) in generating database command (e.g., SQL) answers that accurately reflect user intent. The ambiguity resolution process resolves ambiguity by processing minimal user feedback interactively. For example and as will be described in greater detail below, the ambiguity resolution process processes natural language queries and flags ambiguities in NL2SQL tasks and generates targeted questions for prompting the user. In one example, the ambiguity resolution process processes user feedback in the form of a binary approval or disapproval for generating revised database command queries based on user feedback. In another example, the ambiguity resolution process processes user feedback by generating clarifying questions for prompting the user for generating revised database command queries based on the user's responses to the clarifying questions. In another example, the ambiguity resolution process processes user feedback by generating clarifying questions for prompting the user for generating revised database command queries based on the user's responses to the clarifying questions but iteratively continues until no further ambiguities are flagged. In one example implementation of the present disclosure that flags ambiguities and generates clarifying questions, the accuracy performance of the generative AI model was enhanced by 41.8%.

Given an electronic database and a natural language query, the goal of converting the natural language query to a database command query (e.g., SQL) (NL2SQL) is to find a database command query that addresses the natural language query. NL2SQL task has broad applications in databases, geographical information systems, healthcare systems, and code generation, among other areas. A quality NL2SQL solution can greatly enhance the productivity of users, by allowing individuals with various levels of database command (e.g., SQL) expertise, to interact with an electronic database more effectively.

Although generative AI models (e.g., large language models (LLMs)) have brought advancements and showcased strong potential for addressing NL2SQL, there remain several complex challenges to support enterprise-grade NL2SQL. One of the key challenges is to identify the intent of users' natural language questions accurately, and then generate database command queries that match the identified user's intent.

There are several known causes of ambiguities in an NL2SQL translation. First, in contrast to many popular academic NL2SQL benchmarks, real-world databases often contain noisy data values, lack meaningful semantics in their table and column names, and usually do not provide metadata with column specifications. Consider the example natural language query: "Which district has highest active loan?" for an electronic database concerning financial data. In this example, suppose that the electronic database includes eight tables: "account", "card", "client", "disp", "district", "loan", "order", and "transaction". The district table includes columns named "district_id", "A2", "A3", ... "A16". As such, columns "A2"-"A16" do not provide any meaningful semantic information. The loan table includes a status column with four distinct values: "A", "B", "C", and "D". As such, at least two ambiguities are notable: 1) would the "district_id" provide the district name desired in the natural language query? and 2) if the active loans are referenced by values "C" and "D", a response of "A" for active would be incorrect.

Without the knowledge about the semantics of the values of the status column in the loan table, answering the example natural language question is difficult for a generative AI model. Additionally, NL2SQL benchmarks generally have a single correct answer for each natural language query. However, in practice, the same natural language query can have multiple, possible interpretations that may vary from user to user. Thus, understanding the user intent is critical to make sure that the interpretation a user has in mind is used to process the natural language query when generating the corresponding database command query. Continuing with the above example, knowing whether the user wants "district_id" or "district_name" is important to answer the natural language query. Therefore, the unidirectional approaches (i.e., directly providing the answers with no interaction with the user) fail to disambiguate a user's question and do not scale to real-world datasets.

In some implementations, the ambiguity resolution process processes a natural language query concerning data stored within an electronic database. For example, the natural language query is a text-based description of a request a user would like performed on the data of the electronic database. As natural language queries are not written to adhere to the programming languages of a database command query (e.g., SQL), an electronic database is unable to process the natural language query. The ambiguity resolution process converts the natural language query into a database command query using a generative AI model. For instance, a generative AI model (e.g., an LLM) processes the natural language query in the form of a prompt to convert the natural language query into a database command query using limitations of the prompt to confine the output of the generative AI model. A flagged ambiguity is generated by flagging an ambiguity associated with the natural language query using the generative AI model. For example, an ambiguity is flagged when a single natural language query can be converted to multiple, distinct database command queries. User feedback concerning the flagged ambiguity is obtained. For example, the ambiguity resolution process generates a clarifying question for the user concerning the flagged ambiguity. The database command query is revised by processing the natural language query, the database command query, and the flagged ambiguity using the generative AI model. For instance, the ambiguity resolution process generates a prompt for processing by the generative AI model, where the prompt includes the natural language query, the database query, the flagged ambiguity, and the user feedback. This allows the generative AI model to use the user feedback to revise the database command query to address the user's intent.

Accordingly, the ambiguity resolution process uses LLMs to address the limitations in prior approaches. Motivated by the strong reasoning and code generation capabilities in LLMs, the ambiguity resolution process uses the generative AI model with different types of user interactions. Accordingly, the ambiguity resolution process iteratively flags ambiguities, generates clarification queries, and incorporates user feedback in generating the user's expected database command query. This interactive process allows the generative AI model to refine its database command query-reasoning and generating process, leading to more accurate and context-aware responses. In this manner, the ambiguity resolution process can dynamically adjust NL2SQL answers based on the user's intent, thereby improving utility and accuracy.

The details of one or more implementations are set forth in the accompanying drawings and the description below. Other features and advantages will become apparent from the description, the drawings, and the claims.

### The Ambiguity Resolution Process:

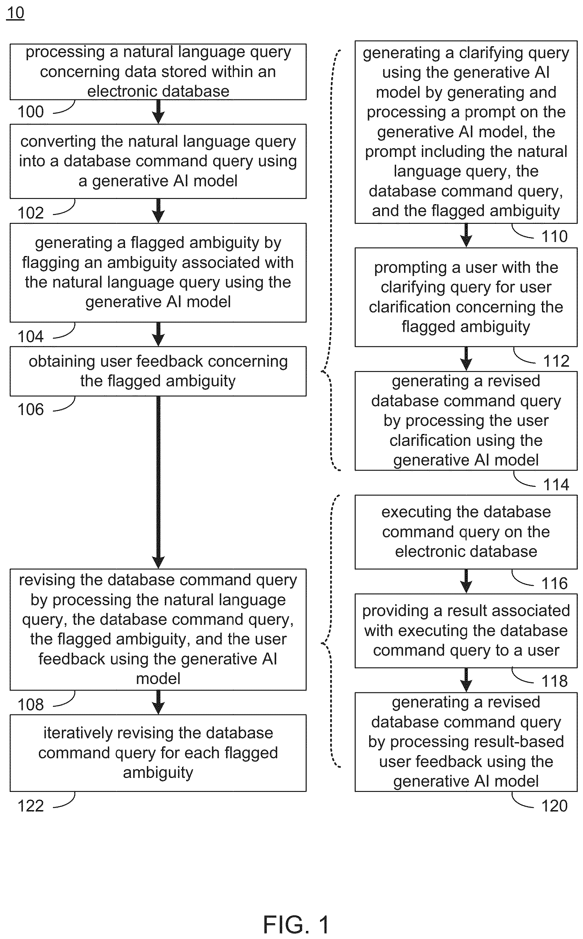

Referring to FIGS. 1-3, ambiguity resolution process 10 processes 100 a natural language query concerning data stored within an electronic database. The natural language query is converted 102 into a database command query using a generative AI model. A flagged ambiguity is generated 104 by flagging an ambiguity associated with the natural language query using the generative AI model. User feedback concerning the flagged ambiguity is obtained 106. The database command query is revised 108 by processing the natural language query, the database command query, and the flagged ambiguity using the generative AI model.

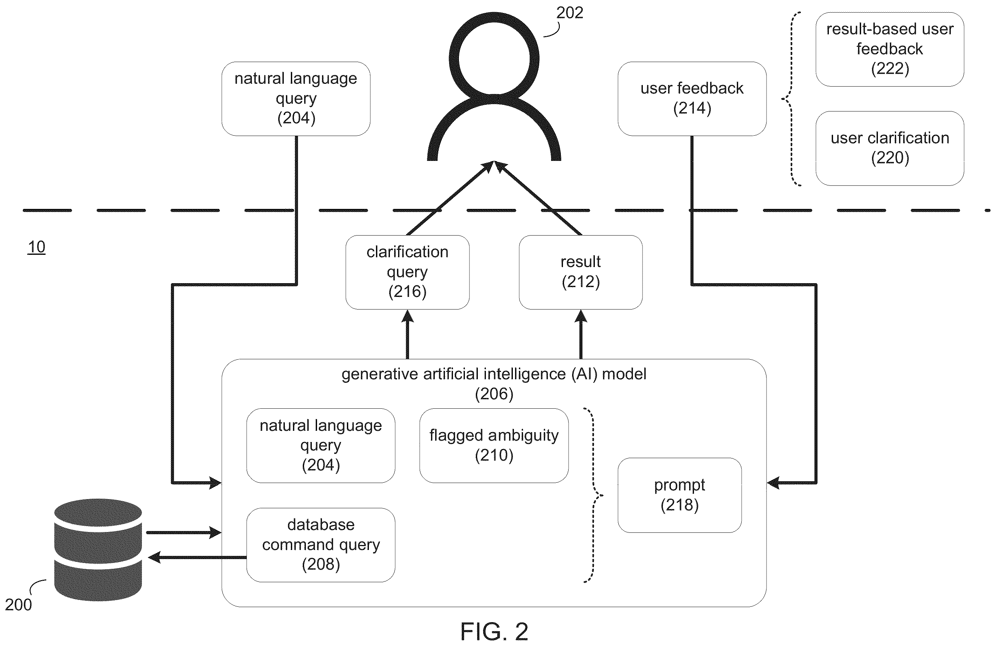

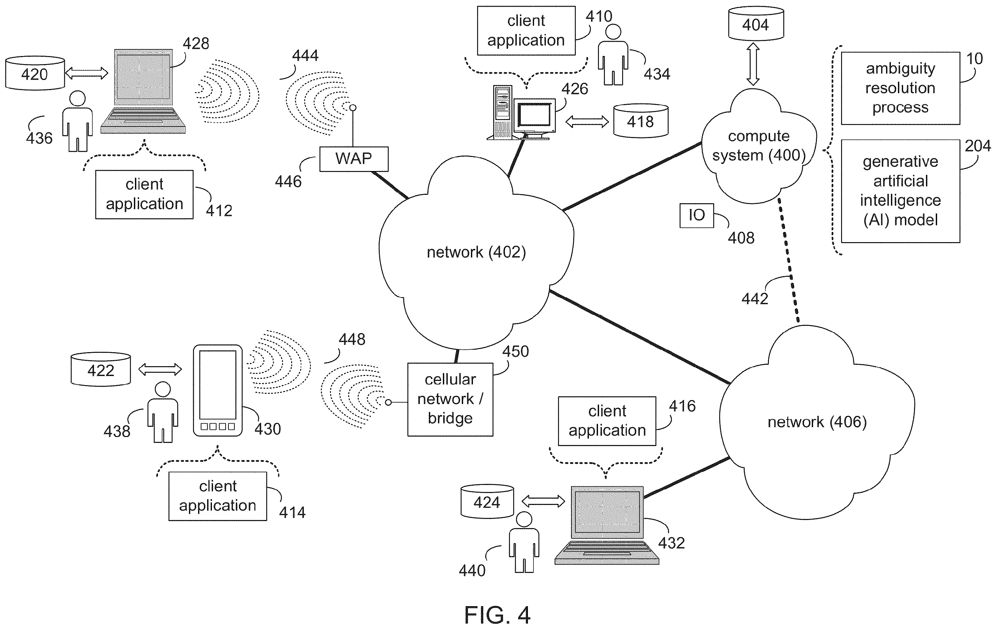

In some implementations, ambiguity resolution process 10 processes 100 a natural language query concerning data stored within an electronic database. For example, an electronic database is a digital collection of data that is stored and managed using computing devices and systems. Electronic databases are designed to allow users to search, retrieve, update, and manage data efficiently. In some implementations, electronic databases are organized in a structured format or schema (e.g., tables, fields, records, etc.). Referring also to FIG. 2 and in some implementations, an electronic database (e.g., electronic database 200) is accessible to a user (e.g., user 202) over a computing network (e.g., as shown in FIG. 4 and as described in greater detail below). In one example, electronic database 200 is stored in a single storage system. In another example, electronic database 200 is stored across multiple storage devices and/or storage systems in a cloud storage system.

In some implementations, ambiguity resolution process 10 processes 100 a natural language query from a user (e.g., user 202). A natural language query is non-formal description of a user's request for data, or information about the data, in electronic database 200. As discussed above, an example of a natural language query is "Which district has highest active loan?". In some implementations, the natural language query is specific to a particular electronic database (e.g., electronic database 200). In another example, the natural language query is generic and can include a request for data across multiple electronic databases. In this manner, a user (e.g., user 202) can provide a natural language query (e.g., natural language query 204) for obtaining data from a specific electronic database (e.g., electronic database 200), or for data from multiple electronic databases. In some implementations, natural language query 204 is received and processed as a text-based query (e.g., where user 202 inputs natural language query 204 using a computing device as a text-based string). In another example, natural language query 204 is received and processed as an audio-based query (e.g., where user 202 speaks natural language query 204 into a speech recording device that is processed as audio, or is converted from audio to text (e.g., using an automated speech recognition (ASR) system)).

In some implementations, ambiguity resolution process 10 converts 102 the natural language query into a database command query using a generative AI model. For example, a database command query is a request for data from a database that is written in specialized format or schema. In one example, the database command query is a query formatted in Structured Query Language (SQL). However, it will be appreciated that the database command query may be generated in various language formats within the scope of the present disclosure. Referring again to FIG. 2, ambiguity resolution process 10 uses generative AI model (e.g., generative AI model 206) to convert 102 natural language query 204 into a database command query (e.g., database command query 208). A generative artificial intelligence (AI) model (e.g., generative AI model 206) is configured to receive input prompts including text, audio content, and/or images. In some implementations, the generative AI model is a multimodal generative AI model, where multimodal refers to the ability of the generative AI model to understand and generate content in different forms (e.g., text, audio, and images). In one example, generative AI model 206 includes a neural network with many parameters (typically millions or billions of weights or more), trained on large quantities of unlabeled and/or labeled data using self-supervised learning, semi-supervised learning, and/or fine-tuning of the weights to cater the neural network for particular tasks or workloads. In some implementations, generative AI model 206 is one of a large language model (LLM) and a large multimodal model (LMM). In one example, generative AI model 206 is the Generative Pretrained Transformer (GPT) LLM from OpenAI^{®}. In another example, generative AI model 206 is the Bidirectional Encoder Representations from Transformers (BERT) LLM from Google^{®}. In another example, generative AI model 206 is the Codex LLM from OpenAI^{®} for generating code based on natural language instructions. In another example, generative AI model 206 is Tacotron from Google^{®} for speech synthesis. Accordingly, it will be appreciated that various types of generative AI models are usable within the scope of the present disclosure.

In some implementations, ambiguity resolution process 10 converts 102 natural language query 204 into database command query 208 using generative AI model 206 using "few-shot learning". With few-shot learning, ambiguity resolution process 10 provides a prompt to generative AI model 206 including a number of examples of the form {input, output}, where input is the description of the task and output is the expected result generated by generative AI model 206 for the respective input. Few-shot learning generally leads to a more accurate answer compared to when no examples are provided in the prompt. Large language models have been shown to exhibit good performance when provided with few-shot examples for a wide variety of tasks or inputs. In one example, ambiguity resolution process 10 converts 102 natural language query 204 (e.g., "Show me all employees who earn more than $50,000") into database command query 208 (e.g., "SELECT * FROM employees WHERE salary > 50000") using generative AI model 206.

In some implementations, ambiguity resolution process 10 generates 104 a flagged ambiguity by flagging an ambiguity associated with the natural language query using the generative AI model. An ambiguity is a non-definitive mapping between a natural language query and a database command query. In some implementations, an ambiguity is flagged when a single natural language query can be converted to multiple, distinct database command queries. For example, consider an example natural language query: "Which artist/group is most productive?". In this example, ambiguity resolution process 10 converts natural language query 204 to database command queries (e.g., 1) "SELECT artist, COUNT(*) as total FROM torrents GROUP BY artist ORDER BY total LIMIT 1"; and 2) "SELECT artist FROM torrents GROUP BY artist ORDER BY SUM(totalSnatched) DESC LIMIT 1"). In this example, the ambiguity as to the question (i.e., what does most productive mean in the context of the data in electronic database 200). While one example of an ambiguity is described here, it will be appreciated that generative AI model 206 is trained to identify various types of ambiguities within the scope of the present disclosure. In some implementations, ambiguity resolution process 10 generates 104 the flagged ambiguity (e.g., flagged ambiguity 210) using a separate, trained machine learning model. In this example, the machine learning model is trained with training data including inputs of natural language query / database command query pairs and corresponding outputs of flagged ambiguities. In this manner, ambiguity resolution process 10 is able to use specially trained machine learning model to flag ambiguities.

In one example, the ambiguity includes a natural language query-based ambiguity. For example, natural language query-based ambiguities are flagged when different interpretations of natural language query, or portions of the natural language query, result in different database command queries and/or different results from database command queries. Referring again to the above example natural language query (i.e., "Which artist/group is most productive?"). In this example, multiple database command queries are generated (i.e., 1) "SELECT artist, COUNT(*) as total FROM torrents GROUP BY artist ORDER BY total LIMIT 1"; and 2) "SELECT artist FROM torrents GROUP BY artist ORDER BY SUM(totalSnatched) DESC LIMIT 1")). Accordingly, ambiguity resolution process 10 generates 104 a flagged ambiguity by flagging this natural language query as a natural language query-based ambiguity.

In another example, the ambiguity includes an electronic database-based ambiguity. For example, electronic database-based ambiguities are flagged when entities in the natural language query do not have a clear mapping to the database schema. The main causes for this type of ambiguity are the semantics of the columns are not clear (e.g., columns with dummy names: col1, col2, ...) and when at least two columns (maybe from different tables) share similar semantics (e.g., locations and areas). For instance, suppose the natural language query is "For award winners, which position has the most hall of fame players?". In this example, ambiguity resolution process 10 converts the natural language query to database command queries: 1) "SELECT notes FROM player_award AS p JOIN hall_of_fame AS h ON p.player_id=h.player_id WHERE inducted='Y' GROUP BY notes ORDER BY COUNT(*) DESC LIMIT 1"; and 2) "SELECT category FROM player_award as p JOIN hall_of_fame as h ON p.player_id = h.player_id WHERE inducted = 'Y' GROUP BY category ORDER BY COUNT(h.player_id) DESC LIMIT 1". In this example, the term "position" in the natural language query is ambiguous relative to the columns "notes" and "category" from the electronic database.

In another example, electronic database-based ambiguities are flagged when there is uncertainty about the appropriate predicate values to use. For instance, the predicates referenced in the natural language query may differ from their physical storage formats in the database, such as being encoded as numbers, single letters, or phrases. Consider the natural language query "Show all fires caused by campfires in Texas?". In this example, ambiguity resolution process 10 generates an electronic database-based ambiguity based on the following database command queries: 1) "SELECT * FROM Fires WHERE STATE = 'X' and STAT_CAUSE_DESCR = 'Campfire'"; and 2) "SELECT * FROM Fires WHERE STATE = 'TEXAS' and STAT_CAUSE_DESCR LIKE '%Campfire%'." The predicates "campfires in Texas" and the formatting of 'TX' and 'TEXAS', and STAT_CAUSE_DESCR of 'Campfire' and LIKE '%Campfire%' represent different encodings. As such, ambiguity resolution process 10 generates 104 a flagged ambiguity by flagging this natural language query as an electronic database-based ambiguity.

In another example, the ambiguity includes a result-based ambiguity. For example, result-based ambiguities are flagged when the natural language query does not specify the expected format of the output table. To accurately answer the user's query, the specifics of the natural language query, such as the number of columns to select, whether to include aggregates or present information in a specific format and if duplicates in the output are acceptable, needs to be known. Consider the example natural language query: "What is the torrent download statistics for each release year?" and corresponding database command queries: 1) "SELECT groupYear, SUM(totalSnatched) AS total FROM torrents GROUP BY groupYear ORDER BY groupYear" and 2) "SELECT SUM(totalSnatched) FROM torrents GROUP BY groupYear." In this example, it is unclear how the user wants the download statistics to be ordered (i.e., ordered by release year or in some other order). Accordingly, ambiguity resolution process 10 generates a flagged ambiguity by flagging this natural language query as a result-based ambiguity.

In some implementations, ambiguity resolution process 10 obtains 106 user feedback concerning the flagged ambiguity. For example, ambiguity resolution process 10 provides the flagged ambiguity (e.g., flagged ambiguity 210), the database command query (e.g., database command query 208), and/or a result (e.g., result 212) generated from executing database command query 208 on electronic database 200, to a user for user feedback concerning the flagged ambiguity. In one example, ambiguity resolution process 10 obtains binary feedback. For example, ambiguity resolution process 10 obtains 106 a simple binary indicator that confirms whether the generated database command query is correct or not without providing additional details. In this manner, the user feedback (e.g., user feedback 214) is used to improve the overall quality of the generated database command query. In one example, and as shown below in Algorithm 1, ambiguity resolution process 10 provides database command query to user 202 to obtain 106 user feedback concerning the database command query.

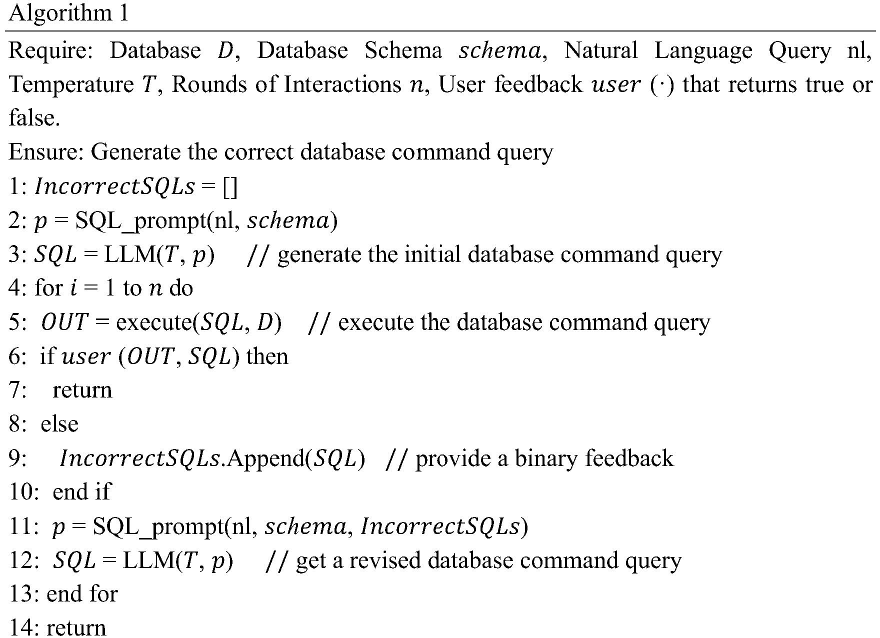

In some implementations, ambiguity resolution process 10 obtains 106 user feedback in the form of any "incorrect" database command queries as labeled by the user. For example, user 202 can flag or otherwise label database command queries as incorrect. These identified database command queries are appended into a list for processing by generative AI model 206. As will be discussed in greater detail below, starting from generating a revised database command query, the list of incorrect queries is also provided to the generative AI model as user feedback 214.

In some implementations, obtaining 106 the user feedback concerning the flagged ambiguity includes generating 110 a clarifying query using the generative AI model by generating and processing a prompt on the generative AI model, the prompt including the natural language query, the database command query, and the flagged ambiguity. For example, to accelerate the steps in finding a correct database command query, the generation of clarification queries is more efficient than a binary feedback. Accordingly and in one example, ambiguity resolution process 10 employs a multiple-choice format for clarification queries, consistently including an option for users to provide free-form input. As shown in Algorithm 2 below, in addition to logging incorrect database queries, ambiguity resolution process 10 uses the flagged ambiguities to generate a clarification query (e.g., clarification query 216) to the user (e.g., user 202). As will be described in greater detail below, once ambiguity resolution process 10 receives the user clarification, ambiguity resolution process 10 prompts generative AI model 206 to generate a revised database command query that accurately reflects the user's input and aligns with their feedback.

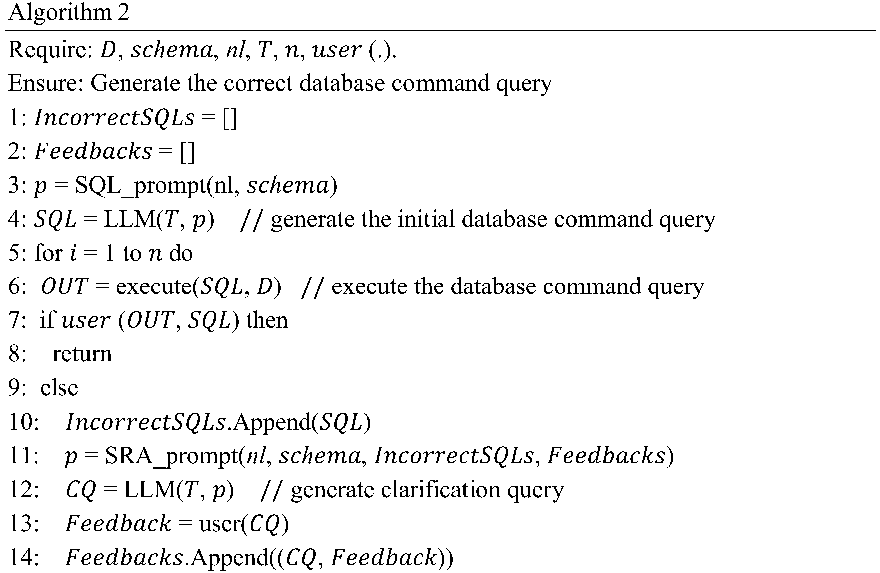

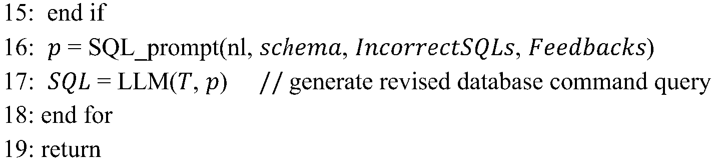

In some implementations, the prompt for both generating the database command query and generating the clarification query takes incorrect database command queries and user feedback for the incorrect database command queries as input. In the database command query generation stage, including this information in the input prompt helps generative AI model 206 to generate better database command queries by flagging past errors and adhering to user feedback. In some implementations and in the clarification query generation stage, including this information in the input prompt helps generative AI model 206 to more effectively pinpoint the remaining ambiguities and prevents generative AI model 206 from repeating previously asked clarification queries.

In one example and as shown in FIG. 2, ambiguity resolution process 10 generates 110 a prompt (e.g., prompt 218) with the following prompt template:
1. Summarize the information that is clear based on the results to previous clarification questions and incorrect queries.
2. Evaluate whether natural language query-based ambiguities, electronic database-based ambiguities, and/or result-based ambiguities remain in formulating a database command query to answer the natural language query, considering each category of ambiguities individually.
3. Ask a multiple-choice clarification question to clarify the remaining ambiguities and help generate a revised database command query.

In some implementations, obtaining 106 the user feedback concerning the flagged ambiguity includes prompting 112 a user with the clarifying query for user clarification concerning the flagged ambiguity 210. For example, consider again the natural language query: "Which district has highest active loan?". In this example, ambiguity resolution process 10 generates and processes a prompt (e.g., prompt 218) using generative AI model 206 to generate clarification query 216 (e.g., "What defines an 'active' loan?") with the following options as part of clarification query 216:
a) An active loan is one where the loan status is 'A'
b) An active loan is one that has not yet been fully paid off
c) An active loan is one where the loan status is 'A' or 'B'
d) Other (please specify).

In this example, although 'A' usually stands for 'active', for this particular financial database (e.g., electronic database 200), 'C' and 'D' correspond to the active loan status. Accordingly, ambiguity resolution process 10 obtains 106 user clarification 220 specifying in the free-form feedback for option (d) that the active loan is defined by the loan status being 'C' or 'D'.

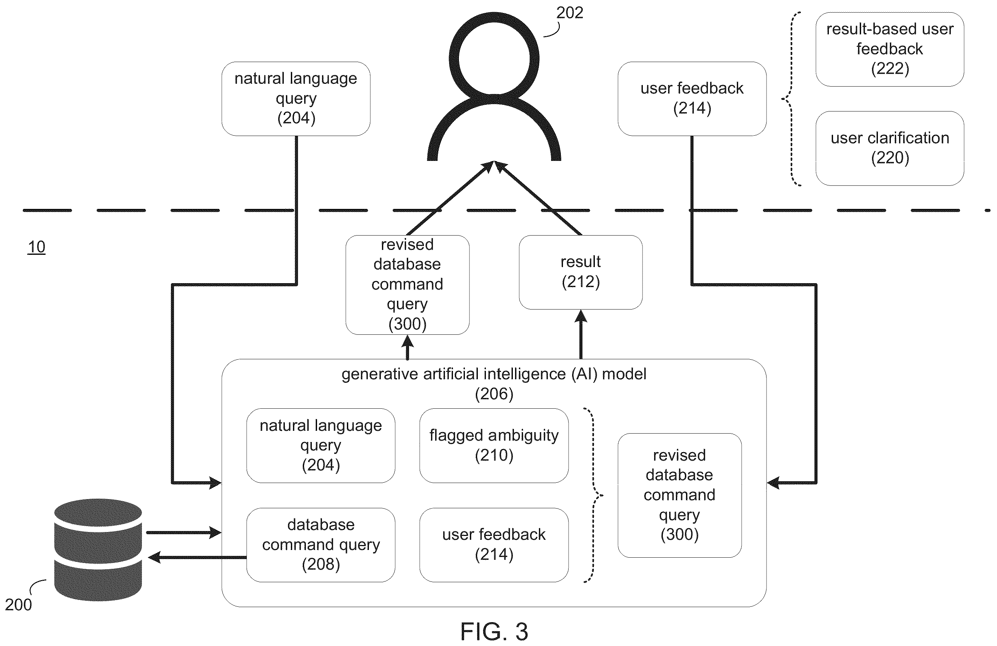

In some implementations, ambiguity resolution process 10 revises 108 the database command query by processing the natural language query, the database command query, the flagged ambiguity, and the user feedback using the generative AI model. For example, using user feedback 214, ambiguity resolution process 10 revises 108 database command query 208 to resolve flagged ambiguity 210 by processing user feedback 214 in a new or updated prompt to generative AI model 206 including user feedback 214. In this manner and as shown in FIG. 3, ambiguity resolution process 10 retains the user's interactions and feedback concerning flagged ambiguity 210 to generate 114 a revised database command query (e.g., revised database command query 300) by processing user clarification 220 using generative AI model 206.

In some implementations, ambiguity resolution process 10 executes 116 the database command query on the electronic database and provides 118 a result associated with executing the database command query to a user. For example and as discussed above, when obtaining 106 user feedback concerning flagged ambiguity 210, ambiguity resolution process 10 executes 116 database command query 208 on electronic database 200 to show the result (e.g., result 212) of the execution to the user (e.g., user 202). In some implementations, result 212 provides an additional basis for understanding flagged ambiguity 210. For instance, a user who is inexperienced with database command querying may not fully understand or appreciate the impact of a flagged ambiguity until the database command query is executed on electronic database 200. Accordingly, ambiguity resolution process 10 executes 116 database command query 208 on electronic database 200 to generate result and provides 118 result 212 to user 202 as result-based user feedback 222.

In some implementations, revising 108 the database command query includes generating 120 a revised database command query by processing result-based user feedback using the generative AI model. For example, ambiguity resolution process 10 generates 120 revised database command query 300 by generating or updating a prompt for generative AI model 206 to further include result-based user feedback 222.

In some implementations, revising 108 the database command query includes iteratively revising 122 the database command query for each flagged ambiguity. For example, using revised database command query 300, ambiguity resolution process 10 generates flagged ambiguities associated with revised database command query 300 and/or natural language query 204 relative to revised database command query 300 and iteratively revises 122 database command queries until all flagged ambiguities have been resolved.

Although ambiguity is one of the key factors causing generative AI models to struggle with NL2SQL tasks, generative AI models may still fail to correctly answer a natural language query, even after all ambiguities are addressed. For instance, generative AI models may fail to focus on the user feedback or fail to use the correct database command keywords due to inherent limitations in generative AI models when answering complex questions. In some implementations, when all ambiguities are addressed, subsequent interactions between a generative AI model and the user may not be increasingly helpful, as the clarification queries would not be specific to any database command schema. Accordingly, Algorithm 3 below follows the same procedures as Algorithm 2 but terminates early when no remaining flagged ambiguities are detected. For example, the last phase (generating a clarification question) is an if-else statement, outputting a clarification query only if ambiguities are identified in the review phase.

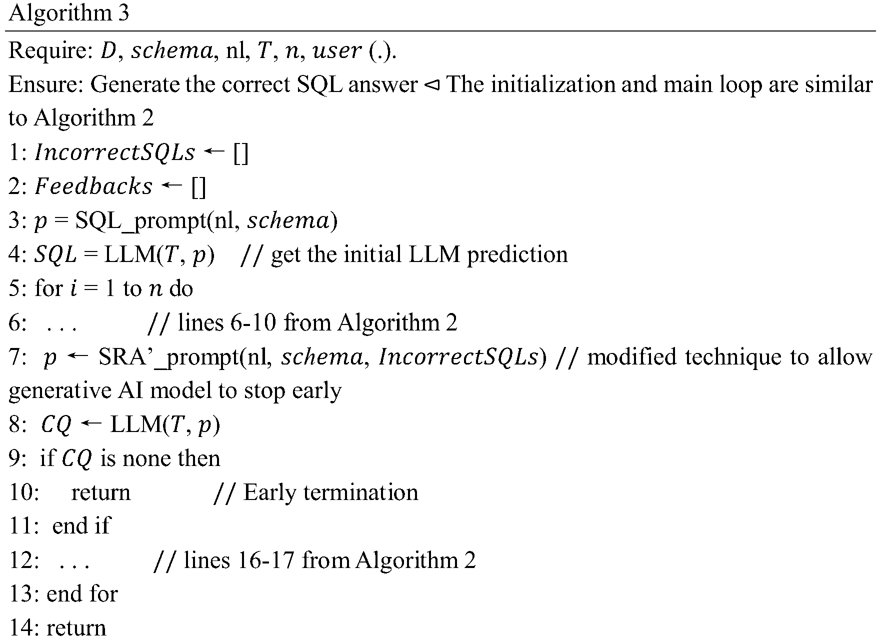

As shown above, the above iterative revising continues until no further flagged ambiguities are detected. In some implementations of the present disclosure, by flagging ambiguities and processing user feedback concerning the flagged ambiguities using a generative AI model, the accuracy of the generative AI model-generated database command queries from natural language queries is improved. For instance, in one example involving few-shot learning (e.g., five-shot learning) and the generation of clarification queries as described above, a 41.8% increase in the execution accuracy of the database command query generated by generative AI model 206.

### System Overview:

Referring to FIG. 4, an ambiguity resolution process 10 is shown to reside on and is executed by compute system 400, which is connected to network 402 (e.g., the Internet or a local area network). Examples of compute system 400 include: a Network Attached Storage (NAS) system, a Storage Area Network (SAN), a personal computer with a memory system, a server computer with a memory system, and a cloud-based device with a memory system. A SAN includes one or more of a personal computer, a server computer, a series of server computers, a minicomputer, a mainframe computer, a RAID device, and a NAS system.

The various components of compute system 400 execute one or more operating systems, examples of which include: Microsoft^{®} Windows^{®}; Mac^{®} OS X^{®}; Red Hat^{®} Linux^{®}, Windows^{®} Mobile, Chrome OS, Blackberry OS, Fire OS, or a custom operating system (Microsoft and Windows are registered trademarks of Microsoft Corporation in the United States, other countries or both; Mac and OS X are registered trademarks of Apple Inc. in the United States, other countries or both; Red Hat is a registered trademark of Red Hat Corporation in the United States, other countries or both; and Linux is a registered trademark of Linus Torvalds in the United States, other countries or both).

The instruction sets and subroutines of ambiguity resolution process 10, which are stored on storage device 404 included within compute system 400, are executed by one or more processors (not shown) and one or more memory architectures (not shown) included within compute system 400. Storage device 404 may include: a hard disk drive; an optical drive; a RAID device; a random-access memory (RAM); a read-only memory (ROM); and all forms of flash memory storage devices. Additionally or alternatively, some portions of the instruction sets and subroutines of ambiguity resolution process 10 are stored on storage devices (and/or executed by processors and memory architectures) that are external to compute system 400.

In some implementations, network 402 is connected to one or more secondary networks (e.g., network 406), examples of which include: a local area network; a wide area network; or an intranet.

Various input / output (IO) requests (e.g., IO request 408) are sent from client applications 410, 412, 414, 416 to compute system 400. Examples of IO request 408 include data write requests (e.g., a request that content be written to compute system 400) and data read requests (e.g., a request that content be read from compute system 400).

The instruction sets and subroutines of client applications 410, 412, 414, 416, which may be stored on storage devices 418, 420, 422, 424 (respectively) coupled to client electronic devices 426, 428, 430, 432 (respectively), may be executed by one or more processors (not shown) and one or more memory architectures (not shown) incorporated into client electronic devices 426, 428, 430, 432 (respectively). Storage devices 418, 420, 422, 424 may include: hard disk drives; tape drives; optical drives; RAID devices; random access memories (RAM); read-only memories (ROM), and all forms of flash memory storage devices. Examples of client electronic devices 426, 428, 430, 432 include personal computer 426, laptop computer 428, smartphone 430, laptop computer 432, a server (not shown), a data-enabled, and a dedicated network device (not shown). Client electronic devices 426, 428, 430, 432 each execute an operating system.

Users 434, 436, 438, 440 may access compute system 400 directly through network 402 or through secondary network 406. Further, compute system 400 may be connected to network 402 through secondary network 406, as illustrated with link line 442.

The various client electronic devices may be directly or indirectly coupled to network 402 (or network 406). For example, personal computer 426 is shown directly coupled to network 402 via a hardwired network connection. Further, laptop computer 432 is shown directly coupled to network 406 via a hardwired network connection. Laptop computer 428 is shown wirelessly coupled to network 402 via wireless communication channel 444 established between laptop computer 428 and wireless access point (e.g., WAP) 446, which is shown directly coupled to network 402. WAP 446 may be, for example, an IEEE 802.11a, 802.11b, 802.11g, 802.11n, Wi-Fi^{®}, and/or Bluetooth^{®} device that is capable of establishing a wireless communication channel 444 between laptop computer 428 and WAP 446. Smartphone 430 is shown wirelessly coupled to network 402 via wireless communication channel 448 established between smartphone 430 and cellular network / bridge 450, which is shown directly coupled to network 402.

### General:

As will be appreciated by one skilled in the art, the present disclosure may be embodied as a method, a system, or a computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium having computer-usable program code embodied in the medium.

Any suitable computer usable or computer readable medium may be used. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object-oriented programming language. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet.

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general-purpose computer / special purpose computer / other programmable data processing apparatus, such that the instructions, which execute via the processor of the computer or other programmable data processing apparatus, create means for implementing the functions/acts specified in the flowchart and/or block diagram block or blocks.

These computer program instructions may also be stored in a computer-readable memory that may direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, not at all, or in any combination with any other flowcharts depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

A number of implementations have been described. Having thus described the disclosure of the present application in detail and by reference to embodiments thereof, it will be apparent that modifications and variations are possible without departing from the scope of the disclosure defined in the appended claims.

## Claims

1. A computer-implemented method, executed on a computing device, comprising:
processing a natural language query concerning data stored within an electronic database;
converting the natural language query into a database command query using a generative AI model;
generating a flagged ambiguity by flagging an ambiguity associated with the natural language query using the generative AI model;
obtaining user feedback concerning the flagged ambiguity; and
revising the database command query by processing the natural language query, the database command query, the flagged ambiguity, and the user feedback using the generative AI model.

2. The computer-implemented method of claim 1, further comprising:
executing the database command query on the electronic database; and
providing a result associated with executing the database command query to a user.

3. The computer-implemented method of claim 1 or 2, wherein revising the database command query includes generating a revised database command query by processing result-based user feedback using the generative AI model.

4. The computer-implemented method of claim 1 or 2, wherein revising the database command query includes iteratively revising the database command query for each flagged ambiguity.

5. The computer-implemented method of one of claims 1 to 4, wherein obtaining the user feedback concerning the flagged ambiguity includes generating a clarifying query using the generative AI model by generating and processing a prompt on the generative AI model, the prompt including the natural language query, the database command query, and the flagged ambiguity.

6. The computer-implemented method of claim 5, wherein obtaining the user feedback concerning the flagged ambiguity includes prompting a user with the clarifying query for user clarification concerning the flagged ambiguity.

7. The computer-implemented method of claim 6, wherein revising the database command query includes generating a revised database command query by processing the user clarification using the generative AI model.

8. The computer-implemented method of one of claims 1 to 7, at least one of:
wherein the ambiguity associated with the natural language query includes a natural language query-based ambiguity;
wherein the ambiguity associated with the natural language query includes an electronic database-based ambiguity; and
wherein the ambiguity associated with the natural language query includes a result-based ambiguity.

9. A computing system comprising:
a memory; and
a processor configured to process a natural language query concerning data stored within an electronic database, to convert the natural language query into a database command query using a generative AI model, to execute the database command query on the electronic database, to provide a result associated with executing the database command query to a user, to generate a flagged ambiguity by flagging an ambiguity associated with the natural language query using the generative AI model, and to revise the database command query by processing the natural language query, the database command query, the result, and the flagged ambiguity using the generative AI model.

10. The computing system of claim 9, wherein revising the database command query includes generating a revised database command query by processing result-based user feedback using the generative AI model, or
wherein revising the database command query includes iteratively revising the database command query for each flagged ambiguity.

11. The computing system of claim 9 or 10, wherein obtaining the user feedback concerning the flagged ambiguity includes generating a clarifying query using the generative AI model by generating and processing a prompt on the generative AI model, the prompt including the natural language query, the database command query, and the flagged ambiguity.

12. The computing system of claim 11, wherein obtaining the user feedback concerning the flagged ambiguity includes prompting a user with the clarifying query for user clarification concerning the flagged ambiguity.

13. The computing system of claim 12, wherein revising the database command query includes generating a revised database command query by processing the user clarification using the generative AI model.

14. The computing system of one of claims 9 to 13, at least one of:
wherein the ambiguity associated with the natural language query includes a natural language query-based ambiguity;
wherein the ambiguity associated with the natural language query includes an electronic database-based ambiguity; and
wherein the ambiguity associated with the natural language query includes a result-based ambiguity.

15. A computer program product residing on a computer readable medium having a plurality of instructions stored thereon which, when executed by a processor, cause the processor to perform operations comprising:
processing a natural language query concerning data stored within an electronic database;
converting the natural language query into a database command query using a generative AI model;
executing the database command query on the electronic database;
providing a result associated with executing the database command query to a user;
generating a flagged ambiguity by flagging an ambiguity associated with the natural language query using the generative AI model;
obtaining user feedback concerning the flagged ambiguity, wherein obtaining the user feedback includes generating a clarifying query using the generative AI model by generating and processing a prompt on the generative AI model, the prompt including the natural language query, the database command query, the result, and the flagged ambiguity; and
revising the database command query by processing the natural language query, the database command query, the result, the flagged ambiguity, and the user feedback using the generative AI model.
